**Europäisches Patentamt**

**European Patent Office**

**Office européen des brevets**

(11) Veröffentlichungsnummer : **0 327 814 B1**

(12)                      EUROPÄISCHE PATENTSCHRIFT

(45) Veröffentlichungstag der Patentschrift :
**22.04.92 Patentblatt 92/17**

(51) Int. Cl.⁵ : **B01J 21/06,** B01J 37/00,
     B01J 35/10

(21) Anmeldenummer : **89100407.9**

(22) Anmeldetag : **11.01.89**

(54) **Presslinge auf Basis von pyrogen hergestelltem Zirkondioxid, Verfahren zu ihrer Herstellung und ihre Verwendung.**

(30) Priorität : **09.02.88 DE 3803898**

(43) Veröffentlichungstag der Anmeldung :
**16.08.89 Patentblatt 89/33**

(45) Bekanntmachung des Hinweises auf die
Patenterteilung :
**22.04.92 Patentblatt 92/17**

(84) Benannte Vertragsstaaten :
**AT BE CH DE ES FR GB GR IT LI LU NL SE**

(56) Entgegenhaltungen :
EP-A- 0 148 678
EP-A- 0 152 599
EP-A- 0 244 301
US-A- 2 684 951

(73) Patentinhaber : **Degussa Aktiengesellschaft
Weissfrauenstrasse 9
W-6000 Frankfurt am Main 1 (DE)**

(72) Erfinder : **Deller, Klaus, Dr.
Friedhofstrasse 47
W-6452 Hainburg (DE)**
Erfinder : **Ettlinger, Manfred, Dr.
Stifterstrasse 22
W-8757 Karlstein (DE)**
Erfinder : **Klingel, Reinhard, Dr.
Taunusstrasse 6
W-8755 Alzenau (DE)**
Erfinder : **Krause, Helmfried
Odenwaldstrasse 39
W-6458 Rodenbach (DE)**

## Beschreibung

Die Erfindung betrifft Preßlinge auf Basis von pyrogen hergestelltem Zirkondioxid, das Verfahren zu ihrer Herstellung und ihre Anwendung als Katalysatorträger oder Katalysator.

Pyrogen hergestellte Oxide zeichnen sich durch extreme Feinteiligkeit und entsprechend hohe spezifische Oberflächen, sehr hohe Reinheit, sphärische Teilchenform und das Fehlen von Poren aus. Aufgrund dieser Eigenschaften finden die pyrogen hergestellten Oxide zunehmend Interesse als Träger für Katalysatoren (D. Koth, H. Ferch, Chem. Ing. Techn. 52, 628 (1980).

Pyrogen hergestelltes Zirkondioxid ist bekannt. Es wird beschrieben in der DE-OS 36 11 449 (Degussa AG).

Da im allgemeinen Preßlinge als Katalysatoren bzw. Katalysatorträger eingesetzt werden, besteht die Aufgabe der Erfindung darin, Preßlinge aus pyrogen hergestelltem Zirkondioxid herzustellen, die in katalytischen Prozessen eingesetzt werden können.

Gegenstand der Erfindung sind Preßlinge auf Basis von pyrogen hergestelltem Zirkondioxid mit folgenden physikalisch-chemischen Kenndaten:

| | |
|---|---|
| Außendurchmesser | 2 - 15 mm |
| BET-Oberfläche nach DIN 66131 | 30 - 50 m$^2$ / g |
| Porenvolumen | 0,3 - 0,8 ml / g |
| Porenvereilung | keine Poren < 10 nm, mindestens 80 % der Poren im Bereich 10 - 70 nm |
| Bruchfestigkeit | 40 - 300 N |
| Zusammensetzung | mindestens 92 % ZrO$_2$ Rest SiO$_2$, Al$_2$O$_3$, HfO$_2$ |

Die erfindungsgemäßen Preßlinge können in den verschiedensten Formen, wie z. B. zylinderisch, kugelförmig, ringförmig mit einem Außendurchmesser von 2 - 15 mm hergestellt werden.

Ein weiterer Gegenstand der Erfindung ist das Verfahren zur Herstellung der Preßlinge auf Basis von pyrogen hergestelltem Zirkondioxid mit folgenden physikalisch-chemischen Kenndaten:

| | |
|---|---|
| Außendurchmesser | 2 - 15 mm |
| BET-Oberfläche nach DIN 66131 | 30 - 50 m$^2$ / g |
| Porenvolumen | 0,3 - 0,78 ml / g |
| Porenverteilung | keine Poren < 10 nm, mindestens 80 % der Poren im Bereich 10 - 70 nm |
| Bruchfestigkeit | 40 - 300 N |
| Zusammensetzung | mindestens 92 % ZrO$_2$ Rest SiO$_2$, Al$_2$O$_3$, HfO$_2$ |

welches dadurch gekennzeichnet ist, daß man pyrogen hergestelltes Zirkondioxid mit Kaolin und/oder Zucker, Harnstoff unter Zusatz von Wasser homogenisiert, die Mischung bei einer Temperatur von 80 bis 120 °C trocknet, zu einem rieselfähigen Pulver zerkleinert, das Pulver zu Preßlingen verpreßt und die Preßlinge bei 600 bis 1000 °C während eines Zeitraumes von 1 bis 4 Stunden tempert.

In einer besonderen Ausführungsform der Erfindung kann die Mischung vor dem Verpressen die folgenden Zusammensetzungen aufweisen:

50 - 90 Gew.-% Zirkondioxid, vorzugsweise 70 - 85 Gew.-%,

5 - 50 Gew.-% Harnstoff und/oder Zucker, vorzugsweise 15 - 30 Gew.-%,

0,1 - 10 Gew.-% Kaolin, vorzugsweise 1 - 5 Gew.-%,

0,1 - 10 Gew.-% Graphit, vorzugsweise 1 - 5 Gew.-%.

Zur Durchführung des erfindungsgemäßen Verfahrens sind prinzipiell alle Mischer oder Mühlen geeignet, die eine gute Homogenisierung ermöglichen, wie z. B. Schaufel-, Wirbelschicht-, Kreisel- oder Luftstrommischer. Besonders geeignet sind Mischer, mit denen eine zusätzliche Verdichtung des Mischgutes möglich ist, z. B. Pflugscharmischer, Kollergänge oder Kugelmühlen. Nach dem Homogenisieren kann eine weitgehende Trocknung bei 80 - 120 °C erfolgen, so daß man nach dem Zerkleinern ein rieselfähiges Pulver erhält. Die Herstellung der Preßlinge kann sowohl auf Stempelpressen, Exzenterpressen, Strangpressen oder Rundlaufpressen als auch auf Kompaktoren erfolgen.

Die Preßlinge werden bei 600 - 1000 °C 1 bis 4 Stunden getempert.

Durch Variation der Einsatzstoffmengen und des Preßdruckes kann die Bruchfestigkeit, die spez. Gesamtoberfläche und das Porenvolumen in einem gewissen Rahmen verändert werden.

Die erfindungsgemäßen Preßlinge können entweder direkt als Katalysatoren Verwendung finden oder als Katalysatorträger, indem die Formkörper während oder nach ihrer Herstellung mit einer Lösung einer katalytisch wirksamen Substanz getränkt und ggf. durch eine geeignete Nachbehandlung aktiviert werden.

Die erfindungsgemäßen Preßlinge aus pyrogen hergestelltem Zirkonoxid können beispielsweise nach Belegung mit Edelmetallen, Unedelmetallen, Edelmetalloxiden oder Unedelmetalloxiden als Katalysator bei

2

Oxidationsreaktionen, Hydrierungen, Steamreforming, Reforming von Kohlenwasserstoffen, Methanisierung und Fischer Tropsch-Synthesen eingesetzt werden.

Die erfindungsgemäßen Preßlinge weisen die folgenden Vorteile auf:

Hohe chemische Reinheit

Temperaturbeständigkeit

Hohe Festigkeit

Hohes Porenvolumen

Der überwiegende Anteil der Poren liegt im Bereich von 10 bis 70 nm

keine Poren < 10 nm

Säurestabilität

Beispiele

Als pyrogen hergestelltes Zirkondioxid wird ein Zirkondioxid mit den folgenden physikalisch-chemischen Kenndaten eingesetzt:

| Oberfläche nach BET | $m^2$ / g | 40 ± 10 |
|---|---|---|
| Mittlere Größe der Primärteilchen | nm | 30 |
| Stampfdichte[1] normale Ware | g / l | 200 |
| Trocknungsverlust[2] (2 Stunden bei 105 °C) | % | 1 |
| Glühverlust[2][5][4] (2 Stunden bei 1000 °C) | % | 1 |
| pH-Wert[3] (in 4 %iger wäßriger Dispersion) | | 5,5 – 6,5 |
| $ZrO_2$[6] | % | 97,00 |
| $HfO_2$[6] | % | 2,00 |
| $Fe_2O_3$[6] | % | 0,02 |
| $TiO_3$[6] | % | 0,01 |
| HCl[6][8] | % | 0,10 |
| $SiO_2$[6] | % | 0,01 |
| $Al_2O_3$[6] | % | 0,10 |

1) nach DIN 53 194

2) nach DIN 53 194

3) nach DIN 53 200

4) nach DIN 55 921

5) bezogen auf die 2 Stunden bei 105 °C getrocknete Substanz

6) bezogen auf die 2 Stunden bei 1000 °C geglühte Substanz

8) HCl-Gehalt ist Bestandteil des Glühverlustes

Die BET-Oberfläche wird gemäß DIN 66 131 mit Stickstoff bestimmt.
Das Porenvolumen wird rechnerisch aus der Summe der Mikro-, Meso- und Makroporen ermittelt.
Die Bruchfestigkeit wird mittels eines Bruchfestigkeitstesters der Fa. Ewerka, Typ TBH 28, bestimmt.

Die Bestimmung der Mikro- und Mesoporen erfolgt durch Aufnahme einer $N_2$-Isotherme und deren Auswertung nach BET, de Boer und Barret, Joyner, Halenda.

Die Bestimmung der Makroporen erfolgt durch das Hg-Einpreßverfahren.

Beispiel 1

75 % pyrogenes $ZrO_2$
20 % Harnstoff
2 % Kaolin
3 % Graphit

werden unter Zusatz von Wasser homogenisiert, bei 100 °C über 24 h getrocknet und zu einem rieselfähigen Pulver zerkleinert.

Die Tablettierung erfolgt mittels einer Excenterpresse.

Die Rohtabletten werden bei 900 °C 3 h getempert. Die erhaltenen Preßlinge weisen die folgenden physikalisch-chemischen Kenndaten auf:

| | |
|---|---|
| Außendurchmesser | 5 mm |
| BET-Oberfläche nach DIN | 36 $m^2$ / g |
| Porenvolumen | 0,62 ml / g |
| Porenverteilung | keine Poren < 10 nm Durchmesser, 82 % der Poren im Bereich von 10 - 70 nm Durchmesser |
| Bruchfestigkeit | 235 N |
| Zusammensetzung | 95,7 % $ZrO_2$ |
| | 1,8 % $HfO_2$ |
| | 1,3 % $SiO_2$ |
| | 1,2 % $Al_2O_3$ |

Beispiel 2

80 % Zirkoniumdioxid
20 % Zucker (Saccharose)

werden gemäß Beispiel 1 miteinander vermischt, getrocknet und verpreßt.

Die Rohtabletten wurden bei 700 °C 2 h getempert. Die erhaltenen Preßlinge weisen die folgenden physikalisch-chemischen Kenndaten auf:

| | |
|---|---|
| Außendurchmesser | 9 mm |
| BET-Oberfläche nach DIN | 40 $m^2$ / g |
| Porenvolumen | 0,42 ml / g |
| Porenverteilung | keine Poren < 10 nm Durchmesser, 86 % der Poren im Bereich von 10 - 70 nm Durchmesser |
| Burchfestigkeit | 56 N |
| Zusammensetzung | 98 % $ZrO_2$ |
| | 2 % $HfO_2$ |

**Patentansprüche**

1. Preßlinge auf Basis von pyrogen hergestelltem Zirkondioxid mit folgenden physikalisch-chemischen Kenndaten:

| | |
|---|---|
| Außendurchmesser | 2 - 15 mm |
| BET-Oberfläche nach DIN 66131 | 30 - 50 $m^2$ / g |
| Porenvolumen | 0,3 - 0,8 ml / g |
| Porenverteilung | keine Poren < 10 nm, mindestens 80 % der Poren im Bereich 10 - 70 nm |
| Bruchfestigkeit | 40 - 300 N |
| Zusammensetzung | mindestens 92 % $ZrO_2$ Rest $SiO_2$, $Al_2O_3$, $HfO_2$ |

2. Verfahren zur Herstellung der Preßlinge auf Basis von pyrogen hergestelltem Zirkondioxid mit folgenden physikalisch-chemischen Kenndaten:

EP 0 327 814 B1

Außendurchmesser        2 - 15 mm
BET-Oberfläche nach
DIN 66131               30 - 50 m² / g
Porenvolumen            0,3 - 0,8 ml / g
Porenverteilung         keine Poren < 10 nm, mindestens 80 % der Poren im Bereich 10 - 70 nm
Bruchfestigkeit         40 - 300 N
Zusammensetzung         mindestens 92 % ZrO$_2$ Rest SiO$_2$, Al$_2$O$_3$, HfO$_2$

dadurch gekennzeichnet, daß man pyrogen hergestelltes Zirkondioxid mit Kaolin und/oder Zucker, Harnstoff unter Zusatz von Wasser homogenisiert, die Mischung bei einer Temperatur von 80 - 120 °C trocknet, zu einem rieselfähigen Pulver zerkleinert, das Pulver zu Preßlingen verpreßt und die Preßlinge bei 600 bis 1000 °C während eines Zeitraumes von 1 bis 4 Stunden tempert.

3. Verwendung der Preßlinge gemäß Anspruch 1 als Katalysatorträger oder Katalysator.


**Claims**

1. Compacts based on pyrogenically prepared zirconium dioxide and having the following physical-chemical characteristic data:

| | |
|---|---|
| External diameter | 2 to 15 mm |
| BET surface area in accordance with DIN 66131 | 30 to 50 m$^2$/g |
| Pore volume | 0.3 to 0.8 ml/g |
| Pore distribution | no pores <10 nm in diameter, at least 80% of the pores in the range 10 to 70 nm |
| Breaking strength | 40 to 300 N |
| Composition | at least 92% of ZrO$_2$, remainder SiO$_2$, Al$_2$O$_3$, HfO$_2$ |

2. Process for the production of compacts based on pyrogenically prepared zirconium dioxide and having the following physical-chemical characteristic data:

| | |
|---|---|
| External diameter | 2 to 15 mm |
| BET surface area in accordance with DIN 66131 | 30 to 50 m$^2$/g |
| Pore volume | 0.3 to 0.8 ml/g |
| Pore distribution | no pores <10 nm in diameter, at least 80% of the pores in the range 10 to 70 nm |
| Breaking strength | 40 to 300 N |
| Composition | at least 92% of ZrO$_2$, remainder SiO$_2$, Al$_2$O$_3$, HfO$_2$ |

5

characterized in that pyrogenically prepared zirconium dioxide is homogenized with kaolin and/or sugar or urea with addition of water, the mixture is dried at a temperature of from 80 to 120°C and comminuted to form a free-flowing powder, the powder is pressed to form compacts, and the compacts are conditioned at a temperature of from 600 to 1,000°C for a period of 1 to 4 hours.

3. Use of the compacts according to Claim 1 as a catalyst support or catalyst.


**Revendications**

1. Pièces pressées à base de dioxyde de Zirconium produit par voie pyrogène ayant les caractéristiques physico-chimiques suivantes :

```
diamètre extérieur                        2-15 mm
Surface BET selon la norme
DIN 66131                                 30-50 m²/g
Volume des pores                          0,3-0,8 ml/g
Répartition des pores      aucun pore < 10 nm
                           au moins 80 % des pores dans
                           la zone de 10 à 70 nm
Résistance à la rupture                   40-300 N
Composition                au moins 92 % ZrO₂
                           le reste SiO₂, Al₂O₃, HfO₂
```

2. Procédé d'obtention de pièces pressées à base de dioxyde de Zirconium produit par voie pyrogène ayant les caractéristiques physico-chimiques suivantes:

```
diamètre extérieur                        5-15 mm
Surface BET selon la norme
DIN 66131                                 30-50 m²/g
Volume des pores                          0,3-0,8 ml/g
Répartition des pores      aucun pore < 10 nm
                           au moins 80 % des pores dans
                           la zone de 10-70 nm
Résistance à la rupture                   40-300 N
Composition                au moins 92 % de ZrO₂
                           le reste SiO₂, Al₂O₃, HfO₂
```

caractérisé en ce que l'on homogénéise du dioxyde de Zirconium produit par voie pyrogène avec du Kaolin, et/ou du Sucre, de l'urée, en ajoutant de l'eau, que l'on sèche le mélange à une température allant de 80 à 120°C, que l'on pulvérise en une poudre susceptible de couler, que l'on comprime la poudre en pièces pressées et que l'on recuit les pièces pressées de 600 à 1000°C pendant une durée de 1 à 4 heures.

3. Utilisation des pièces pressées selon la revendication 1 comme support de catalyseur ou comme catalyseur.